# EUROPEAN PATENT APPLICATION

(11) **EP 4 617 310 A1**
(43) Date of publication of application: **17.09.2025**
(21) Application number: 23888435.7
(22) Date of filing: 16.10.2023
(51) Int. Cl.: C08L 21/00, C08G 77/28, C08L 83/08

(54) **RUBBER COMPOSITION AND ORGANOPOLYSILOXANE**

(30) Priority: 10.11.2022 JP 2022180025
(71) Applicant: SHIN-ETSU CHEMICAL CO., LTD., Tokyo 1000005 (JP)
(72) Inventor: HIROKAMI, Munenao, Annaka-shi, Gunma 379-0224 (JP); KIMURA, Tsuneo, Annaka-shi, Gunma 379-0224 (JP); IRIFUNE, Shinji, Annaka-shi, Gunma 379-0224 (JP); NAKAMURA, Tsutomu, Tokyo 100-0005 (JP)
(74) Representative: Mewburn Ellis LLP
(86) International application number: PCT/JP2023/037415
(87) International publication number: WO 2024/101082

(57) **Abstract**

A rubber composition containing an organopolysiloxane, e.g., one represented by the following average empirical formula (1), which has a mercapto-group-containing organic group and either or both of a trialkoxysilyl-group-containing organic group and a dialkoxymethylsilyl-group-containing organic group. The rubber composition has excellent vulcanizability and, after having been vulcanized, is extremely good in tensile property, wet gripping, and low rolling resistance to render a desired fuel-saving tire possible.

(A)ₐ(B)_{b}(C)_{c}(D)_{d}SiO_{(4-a-b-c-d)/2} (1)

(A represents a mercapto-group-containing organic group, B represents a trialkoxysilyl-group-containing organic group or a dialkoxymethylsilyl-group-containing organic group, C represents a hydrolyzable group, D represents a C1-C12 alkyl group, a C1-C10 haloalkyl group, or a C6-C12 aryl group, and a, b, c, and d indicate numbers satisfying 0 < a < 1, 0 < b < 1, 0 < c < 3, 0 ≤ d < 1, and 0 < a+b+c+d < 4.)

## Description

### TECHNICAL FIELD

The present invention relates to a rubber composition and an organopolysiloxane, more particularly to a rubber composition that contains an organopolysiloxane containing a mercapto-containing organic group and a trialkoxysilyl group or dialkoxymethylsilyl group.

### BACKGROUND ART

Tires made of silica-filled rubber compositions have excellent performance in automotive applications. In particular, their wear resistance, rolling resistance, and wet grip are outstanding. Enhancements in these performances are closely related to improving the fuel efficiency of tires and are therefore studied actively in recent years.

Increasing the silica loading in a rubber composition is essential for improving fuel efficiency. Silica-filled rubber compositions give tires with low rolling resistance and enhanced wet grip, but such compositions in unvulcanized state have high viscosity and thus require multi-stage kneading or the like, which is a drawback in terms of workability. Thus, simple addition of an inorganic filler, such as silica, to a rubber composition results in insufficient dispersion of the filler and leads to significant decreases in fracture strength and wear resistance.

Solving the above problem essentially requires that a sulfur-containing organosilicon compound be added to enhance the dispersibility of the inorganic filler in rubber and to chemically bond the inorganic filler to the rubber matrix.

Sulfur-containing organosilicon compounds that are known to be effective include compounds containing an alkoxysilyl group and a polysulfide silyl group in the molecule, such as, for example, bis-triethoxysilylpropyl tetrasulfide and bis-triethoxysilylpropyl disulfide (see Patent Documents 1 to 4).

In addition to such polysulfide group-containing organosilicon compounds, use of the following is also known: thioester-type organosilicon compounds containing a blocked mercapto group that act advantageously for the dispersibility of silica, and sulfur-containing organosilicon compounds of such a type that an amino alcohol compound is transesterified to a hydrolyzable silyl group moiety, acting advantageously for the affinity for silica by way of hydrogen bonding (see Patent Documents 5 to 9).

Unfortunately, even the use of the sulfur-containing organosilicon compounds disclosed in the above patent documents does not offer rubber compositions for tires that realize desired fuel efficiency. Furthermore, there remain various challenges with these sulfur-containing organosilicon compounds. For example, such compounds are more costly than sulfide compounds and the production process is complicated, which leads to problems with productivity.

Patent Document 10 discloses a rubber composition for tires that includes a polysiloxane having a mercapto group and a long-chain alkyl group. While this composition gives tires having improved rolling resistance and wet grip, vulcanizability is significantly deteriorated.

### PRIOR ART DOCUMENTS

### PATENT DOCUMENTS

Patent Document 1: JP-A 2004-525230
Patent Document 2: JP-A 2004-18511
Patent Document 3: JP-A 2002-145890
Patent Document 4: U.S. Patent No. 6,229,036
Patent Document 5: JP-A 2005-8639
Patent Document 6: JP-A 2008-150546
Patent Document 7: JP-A 2010-132604
Patent Document 8: Japanese Patent No. 4571125
Patent Document 9: U.S. Patent No. 6,414,061
Patent Document 10: Japanese Patent No. 5339008

### SUMMARY OF INVENTION

### TECHNICAL PROBLEM

The present invention has been made in view of the circumstances discussed above. It is therefore an object of the present invention to provide a rubber composition that is excellent in vulcanizability and also in tensile properties, wet grip, and low rolling resistance after vulcanization, and can give desired fuel-efficient tires, and an organopolysiloxane that imparts the above properties when added to a rubber composition.

### SOLUTION TO PROBLEM

As a result of intensive studies directed to achieving the above object, the present inventors have found that a rubber composition including an organopolysiloxane containing a mercapto-containing organic group and a trialkoxysilyl group or dialkoxymethylsilyl group can attain improvements in vulcanizability as well as in tensile properties, wet grip, and rolling resistance after vulcanization, and have also found that a tire made of this rubber composition can achieve fuel-efficient tire properties, thereby completing the present invention.

Specifically, the present invention provides:
1. A rubber composition including an organopolysiloxane containing a mercapto-containing organic group and either or both of a trialkoxysilyl-containing organic group and a dialkoxymethylsilyl-containing organic group.
2. The rubber composition according to 1, wherein the organopolysiloxane is represented by average empirical formula (1) below:

   (A)ₐ(B)_{b}(C)_{c}(D)_{d}SiO_{(4-a-b-c-d)/2} (1)

   (wherein A denotes a mercapto-containing organic group, B denotes a trialkoxysilyl-containing organic group or a dialkoxymethylsilyl-containing organic group, C denotes a hydrolyzable group, D denotes a C₁-C₁₂ alkyl group, a C₁-C₁₀ haloalkyl group, or a C₆-C₁₂ aryl group, and a, b, c, and d indicate numbers satisfying 0 < a < 1, 0 < b < 1, 0 < c < 3, 0 ≤ d < 1, and 0 < a+b+c+d < 4).
3. The rubber composition according to 2, wherein the mercapto-containing organic group is represented by formula (2) below:

   *-(CH₂)ₘ-SH (2)

   (wherein m indicates an integer of 1 to 10 and *- denotes a valence bond), the trialkoxysilyl-containing organic group or the dialkoxymethylsilyl-containing organic group is represented by formula (3) below:

   *-(CH₂)ₘ-S-(CH₂)ₙ-Si(CH₃)₃₋ₖ(OR¹)ₖ (3)

   (wherein m indicates an integer of 1 to 10, n indicates an integer of 1 to 10, k indicates 2 or 3, R¹ independently at each occurrence denotes a C₁-C₂₀ alkyl group, a C₆-C₁₀ aryl group, a C₇-C₁₀ aralkyl group, or a C₂-C₁₀ alkenyl group, and *- denotes a valence bond), and the hydrolyzable group is represented by formula (4) below:

   *-OR¹ (4)

   (wherein R¹ is the same as defined above and *- denotes a valence bond).
4. The rubber composition according to 2 or 3, wherein d is a number satisfying 0 < d < 1.
5. An organopolysiloxane represented by average empirical formula (1') below:

   (A)ₐ(B)_{b}(C)_{c}(D)_{d}SiO_{(4-a-b-c-d)/2} (1')

   (wherein A denotes a mercapto-containing organic group, B denotes a trialkoxysilyl-containing organic group or a dialkoxymethylsilyl-containing organic group, C denotes a hydrolyzable group, D denotes a C₁-C₁₂ alkyl group, a C₁-C₁₀ haloalkyl group, or a C₆-C₁₂ aryl group, and a, b, c, and d indicate numbers satisfying 0 < a < 1, 0 < b < 1, 0 < c < 3, 0 < d < 1, and 0 < a + b + c + d < 4).

### ADVANTAGEOUS EFFECTS OF INVENTION

The rubber composition of the present invention excels in vulcanizability and in tensile properties, wet grip, and low rolling resistance after vulcanization, and a tire formed using the rubber composition can achieve fuel-efficient tire properties.

### DESCRIPTION OF EMBODIMENTS

The present invention will be described in detail below.

### Organopolysiloxanes

[1] An organopolysiloxane added to a rubber composition of the present invention has a mercapto-containing organic group and either or both of a trialkoxysilyl-containing organic group and a dialkoxymethylsilyl-containing organic group. Specifically, an organopolysiloxane represented by average empirical formula (1) below is preferable.

(A)ₐ(B)_{b}(C)_{c}(D)_{d}SiO_{(4-a-b-c-d)/2} (1)

In formula (1), A denotes a mercapto-containing organic group, B denotes a trialkoxysilyl-containing organic group or a dialkoxymethylsilyl-containing organic group, C denotes a hydrolyzable group, D denotes a C₁-C₁₂ alkyl group, a C₁-C₁₀ haloalkyl group, or a C₆-C₁₂ aryl group, and a, b, c, and d indicate numbers satisfying 0 < a < 1, 0 < b < 1, 0 < c < 3, 0 ≤ d < 1, preferably 0 < d < 1, and 0 < a+b+c+d < 4. From the points of view of the dispersibility of silica and rubber properties, a, b, c, and d are more preferably numbers satisfying 0.05 ≤ a ≤ 0.80, 0.10 ≤ b ≤ 0.9, 1 ≤ c ≤ 2.5, and 0 < d ≤ 0.6, and more preferably numbers satisfying 0.1 ≤ a ≤ 0.7, 0.2 ≤ b ≤ 0.8, 1 ≤ c ≤ 2.5, and 0.05 ≤ d ≤ 0.5.

Incidentally, a, b, c and d mean the average numbers of moles of the respective organic groups per mole of silicon atoms.

More specifically, the organopolysiloxane is more preferably one represented by formula (1) in which the mercapto-containing organic group is represented by formula (2) below:

*-(CH₂)ₘ-SH (2)

(wherein m indicates an integer of 1 to 10 and *- denotes a valence bond), the trialkoxysilyl-containing organic group or the dialkoxymethylsilyl-containing organic group is represented by formula (3) below:

*-(CH₂)ₘ-S-(CH₂)ₙ-Si(CH₃)₃₋ₖ(OR¹)ₖ (3)

(wherein m indicates an integer of 1 to 10, n indicates an integer of 1 to 10, k indicates 2 or 3, R¹ independently at each occurrence denotes a C₁-C₂₀ alkyl group, a C₆-C₁₀ aryl group, a C₇-C₁₀ aralkyl group, or a C₂-C₁₀ alkenyl group, and *- denotes a valence bond), and the hydrolyzable group is represented by formula (4) below:

*-OR¹ (4)

(wherein R¹ is the same as defined above and *- denotes a valence bond).

For R¹ in formulas (3) and (4), specific examples of the C₁-C₂₀ alkyl groups include methyl, ethyl, n-propyl, n-butyl, n-hexyl, n-octyl, n-decyl, and octadecyl groups; specific examples of the C₆-C₁₀ aryl groups include phenyl, tolyl, and naphthyl groups; specific examples of the C₇-C₁₀ aralkyl groups include benzyl group; and specific examples of the C₂-C₁₀ alkenyl groups include vinyl, propenyl, and pentenyl groups.

For D in formula (1), specific examples of the C₁-C₁₂ alkyl groups include methyl, ethyl, n-propyl, n-butyl, n-hexyl, n-octyl, and n-decyl groups; specific examples of the C₁-C₁₀ haloalkyl groups include 1-chloromethyl, 3-chloropropyl, 6-chlorohexyl, 8-chlorooctyl, 1-bromomethyl, 3-bromopropyl, 6-bromohexyl, and 8-bromooctyl groups; and specific examples of the C₆-C₁₂ aryl groups include phenyl, tolyl, styryl, naphthyl, and diphenyl groups. In particular, n-octyl group is preferable from the points of view of the availability of raw materials and rubber properties. The inclusion of D-containing units in the organopolysiloxane leads to enhancements in the dispersibility of silica and hence in rubber properties.

Specific examples of the mercapto-containing organic groups represented by formula (2) include the following groups:

*-CH₂SH

*-C₂H₄SH

*-C₃H₆SH

*-C₄H₈SH

*-C₅H₁₀SH

*-C₆H₁₂SH

*-C₇H₁₄SH

*-C₈H₁₆SH

*-C₉H₁₈SH

*-C₁₀H₂₀SH

(In the above formulas, *- denotes a valence bond. The same applies below.)

Specific examples of the trialkoxysilyl-containing organic groups and the dialkoxymethylsilyl-containing organic groups represented by formula (3) include the following groups:

*-C₃H₆-S-C₂H₄-Si(OCH₃)₃

*-C₃H₆-S-C₂H₄-SiCH₃(OCH₃)₂

*-C₃H₆-S-C₂H₄-Si(OC₂H₅)₃

*-C₃H₆-S-C₂H₄-SiCH₃(OC₂H₅)₂

*-C₃H₆-S-C₆H₁₂-Si(OCH₃)₃

*-C₃H₆-S-C₆H₁₂-SiCH₃(OCH₃)₂

*-C₃H₆-S-C₆H₁₂-Si(OC₂H₅)₃

*-C₃H₆-S-C₆H₁₂-SiCH₃(OC₂H₅)₂

*-C₃H₆-S-C₈H₁₆-Si(OCH₃)₃

*-C₃H₆-S-C₈H₁₆-SiCH₃(OCH₃)₂

*-C₃H₆-S-C₈H₁₆-Si(OC₂H₅)₃

*-C₃H₆-S-C₈H₁₆-SiCH₃(OC₂H₅)₂

*-CH₂-S-C₂H₄-Si(OCH₃)₃

*-CH₂-S-C₂H₄-SiCH₃(OCH₃)₂

*-CH₂-S-C₂H₄-Si(OC₂H₅)₃

*-CH₂-S-C₂H₄-SiCH₃(OC₂H₅)₂

*-CH₂-S-C₆H₁₂-Si(OCH₃)₃

*-CH₂-S-C₆H₁₂-SiCH₃(OCH₃)₂

*-CH₂-S-C₆H₁₂-Si(OC₂H₅)₃

*-CH₂-S-C₆H₁₂-SiCH₃(OC₂H₅)₂

*-CH₂-S-C₈H₁₆-Si(OCH₃)₃

*-CH₂-S-C₈H₁₆-SiCH₃(OCH₃)₂

*-CH₂-S-C₈H₁₆-Si(OC₂H₅)₃

*-CH₂-S-C₈H₁₆-SiCH₃(OC₂H₅)₂

Specific examples of the hydrolyzable groups represented by formula (4) include the following groups:

*-OCH₃

*-OC₂H₅

*-OC₃H₇

*-OC₄H₉

*-OC₅H₁₁

The above organopolysiloxane may be produced by reacting a hydrolysis-condensation product of a mercapto group-containing organosilicon compound represented by formula (5) below with an alkenyl group-containing organosilicon compound represented by formula (7) below, or by reacting a co-hydrolysis-condensation product of a mercapto group-containing organosilicon compound represented by formula (5) below and an organosilicon compound represented by formula (6) below with an alkenyl group-containing organosilicon compound represented by formula (7) below: 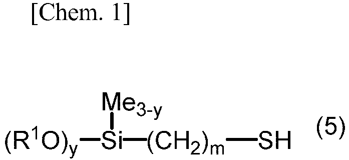 (wherein R¹ and m are the same as defined hereinabove, y indicates an integer of 1 to 3, and Me denotes a methyl group) 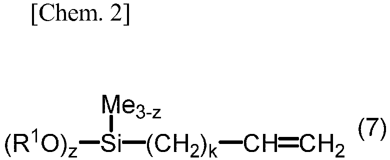 (wherein R¹ is the same as defined hereinabove, k indicates an integer of 0 to 8, z is 2 or 3, and Me denotes a methyl group) 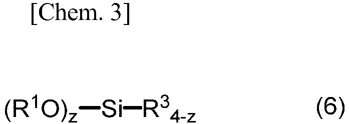 (wherein R¹ is the same as defined hereinabove, R³ denotes a C₁-C₁₂ alkyl group, a C₁-C₁₀ haloalkyl group, or a C₆-C₁₂ aryl group, and z indicates an integer of 1 to 4).

For R³ in formula (6), specific examples of the C₁-C₁₂ alkyl groups include methyl, ethyl, n-propyl, n-butyl, n-hexyl, n-octyl, and n-decyl groups; specific examples of the C₁-C₁₀ haloalkyl groups include 1-chloromethyl, 3-chloropropyl, 6-chlorohexyl, 8-chlorooctyl, 1-bromomethyl, 3-bromopropyl, 6-bromohexyl, and 8-bromooctyl groups; and specific examples of the C₆-C₁₂ aryl groups include phenyl, tolyl, styryl, naphthyl, and diphenyl groups.

Specific examples of the organosilicon compounds represented by formula (5) include α-mercaptomethyltrimethoxysilane, α-mercaptomethylmethyldimethoxysilane, α-mercaptomethyltriethoxysilane, α-mercaptomethylmethyldiethoxysilane, γ-mercaptopropyltrimethoxysilane, γ-mercaptopropylmethyldimethoxysilane, γ-mercaptopropyltriethoxysilane, and γ-mercaptopropylmethyldiethoxysilane.

Specific examples of the organosilicon compounds represented by formula (6) include alkyl group-containing organosilicon compounds, such as methyltrimethoxysilane, dimethyldimethoxysilane, methyltriethoxysilane, dimethyldiethoxysilane, ethyltrimethoxysilane, ethylmethyldimethoxysilane, ethyltriethoxysilane, ethylmethyldiethoxysilane, butyltrimethoxysilane, butylmethyldimethoxysilane, butyltriethoxysilane, butylmethyldiethoxysilane, hexyltrimethoxysilane, hexylmethyldimethoxysilane, hexyltriethoxysilane, hexylmethyldiethoxysilane, octyltrimethoxysilane, octylmethyldimethoxysilane, octyltriethoxysilane, octylmethyldiethoxysilane, decyltrimethoxysilane, decylmethyldimethoxysilane, decyltriethoxysilane, and decylmethyldiethoxysilane; aryl group-containing organosilicon compounds, such as phenyltrimethoxysilane, diphenyldimethoxysilane, phenyltriethoxysilane, diphenyldiethoxysilane, p-styryltrimethoxysilane, p-styrylmethyldimethoxysilane, p-styryltriethoxysilane, and p-styrylmethyldiethoxysilane; halogenated alkyl group-containing organosilicon compounds, such as 1-chloromethyltrimethoxysilane, 1-chloromethylmethyldimethoxysilane, 1-chloromethyltriethoxysilane, 1-chloromethylmethyldiethoxysilane, 3-chloropropyltrimethoxysilane, 3-chloropropylmethyldimethoxysilane, 3-chloropropyltriethoxysilane, 3-chloropropylmethyldiethoxysilane, 6-chlorohexyltrimethoxysilane, 6-chlorohexylmethyldimethoxysilane, 6-chlorohexyltriethoxysilane, 6-chlorohexylmethyldiethoxysilane, 8-chlorooctyltrimethoxysilane, 8-chlorooctylmethyldimethoxysilane, 8-chlorooctyltriethoxysilane, 8-chlorooctylmethyldiethoxysilane, 1-bromomethyltrimethoxysilane, 1-bromomethylmethyldimethoxysilane, 1-bromomethyltriethoxysilane, 1-bromomethylmethyldiethoxysilane, 3-bromopropyltrimethoxysilane, 3-bromopropylmethyldimethoxysilane, 3-bromopropyltriethoxysilane, 3-bromopropylmethyldiethoxysilane, 6-bromohexyltrimethoxysilane, 6-bromohexylmethyldimethoxysilane, 6-bromohexyltriethoxysilane, 6-bromohexylmethyldiethoxysilane, 8-bromooctyltrimethoxysilane, 8-bromooctylmethyldimethoxysilane, 8-bromooctyltriethoxysilane, and 8-bromooctylmethyldiethoxysilane; and tetraalkoxysilanes, such as tetramethoxysilane, tetraethoxysilane, and tetrabutoxysilane.

Specific examples of the alkenyl group-containing organosilicon compounds represented by formula (7) include vinyltrimethoxysilane, vinylmethyldimethoxysilane, vinyltriethoxysilane, vinylmethyldiethoxysilane, allyltrimethoxysilane, allylmethyldimethoxysilane, allyltriethoxysilane, allylmethyldiethoxysilane, hexenyltrimethoxysilane, hexenylmethyldimethoxysilane, hexenyltriethoxysilane, hexenylmethyldiethoxysilane, octenyltrimethoxysilane, octenylmethyldimethoxysilane, octenyltriethoxysilane, and octenylmethyldiethoxysilane.

The hydrolysis-condensation product of a mercapto group-containing organosilicon compound represented by formula (5), or the co-hydrolysis-condensation product of a mercapto group-containing organosilicon compound represented by formula (5) and an organosilicon compound represented by formula (6) may be produced by a known method using a hydrolysis-condensation catalyst.

Various known hydrolysis-condensation catalysts may be used. Specific examples thereof include organic acids, such as acetic acid, butyric acid, maleic acid, and citric acid; inorganic acids, such as hydrochloric acid, nitric acid, phosphoric acid, and sulfuric acid; basic compounds, such as triethylamine; organometallic salts, such as tetrabutyl titanate and dibutyltin dilaurate; and F-containing compounds, such as KF and NH₄F. These may be used singly, or a plurality thereof may be used in combination.

The catalyst is preferably used in an amount of 0.0001 to 1 mol% based on all the reaction components.

The amount of water used in the hydrolysis-condensation reaction may be controlled in accordance with the desired degree of polymerization, and is usually preferably 0.5 to 0.99 mol, more preferably 0.66 to 0.90 mol, per mol of all the hydrolyzable silyl groups.

The hydrolysis-condensation reaction may involve a solvent as required.

Examples of the solvents that may be used include alcohols, such as methanol, ethanol, isopropanol, and t-butanol; ketones, such as acetone and methyl isobutyl ketone; ethers, such as dibutyl ether; esters, such as ethyl acetate; and aromatics, such as toluene. Among those described above, alcohols, such as methanol and ethanol, are preferable.

The reaction between the hydrolysis-condensation product of a mercapto group-containing organosilicon compound represented by formula (5) or the co-hydrolysis-condensation product of a mercapto group-containing organosilicon compound represented by formula (5) and an organosilicon compound represented by formula (6), and the vinyl group-containing organosilicon compound represented by formula (7) may be performed using a known ene-thiol reaction technique.

Where necessary, the ene-thiol reaction may involve a catalyst, such as an organic peroxide or an azo compound.

Specific examples of the organic peroxides include benzoyl peroxide, cumene hydroperoxide, di-tert-butyl peroxide, tert-butyl hydroperoxide, and dicumyl peroxide.

Specific examples of the azo compounds include 2,2'-azobispropane, 2,2'-dichloro-2,2'-azobispropane, 1,1'-azo(methylethyl) diacetate, 2,2'-azobisisobutane, 2,2'-azobisisobutyramide, 2,2'-azobisisobutyronitrile (AIBN), methyl 2,2'-azobis-2-methylpropionate, 2,2'-dichloro-2,2'-azobisbutane, 2,2'-azobis-2-methylbutyronitrile, dimethyl 2,2'-azobisisobutyrate, 3,5-dihydroxymethylphenylazo-2-methylmalonodinitrile, 2,2'-azobis-2-methylvaleronitrile, dimethyl 4,4'-azobis-4-cyanovalerate, and 2,2'-azobis-2,4-dimethylvaleronitrile.

The catalyst is preferably used in an amount of 0.00001 to 10 parts by weight per 100 parts by weight of the total amount of the hydrolysis-condensation product of a mercapto group-containing organosilicon compound represented by formula (5) or the co-hydrolysis-condensation product of a mercapto group-containing organosilicon compound represented by formula (5) and an organosilicon compound represented by formula (6), and the alkenyl group-containing organosilicon compound represented by formula (7).

The ene-thiol reaction may involve a solvent as required.

Examples of the solvents that may be used include alcohols, such as methanol, ethanol, isopropanol, and t-butanol; ketones, such as acetone and methyl isobutyl ketone; ethers, such as dibutyl ether; esters, such as ethyl acetate; aromatics, such as toluene; and hydrocarbons, such as hexane and decane.

To avoid the volatilization of the vinyl group-containing organosilicon compound represented by formula (7), the reaction temperature in the ene-thiol reaction is preferably 0 to 200°C, and more preferably 50 to 150°C.

### [2] Rubber compositions

A rubber composition of the present invention includes the organopolysiloxane (A) described above, and may further include a diene rubber (B) and a filler (C).

The amount in which the organopolysiloxane (A) is added is preferably 3 to 20 parts by weight, and more preferably 5 to 15 parts by weight per 100 parts by weight of the filler (C) described later in consideration of, for example, properties of the rubber that is obtained, and the balance between the effect that is exerted and the economic efficiency.

The diene rubber (B) may be any rubber that has hitherto been commonly used in various types of rubber compositions. Specific examples thereof include natural rubber (NR) and diene rubbers, such as various isoprene rubbers (IR), various styrene-butadiene copolymer rubbers (SBR), various polybutadiene rubbers (BR), and acrylonitrile-butadiene copolymer rubbers (NBR). These may be used singly, or two or more may be used in combination. The diene rubbers may be used in combination with, for example, non-diene rubbers, such as butyl rubbers (IIR) and ethylene-propylene copolymer rubbers (EPR, EPDM).

Examples of the fillers (C) include silica, talc, clay, aluminum hydroxide, magnesium hydroxide, calcium carbonate, and titanium oxide. Among these, silica is preferable. It is more preferable that the rubber composition of the present invention be used as a silica-containing rubber composition.

In this case, the amount of the filler (C) is preferably 5 to 200 parts by weight, and more preferably 30 to 120 parts by weight per 100 parts by weight of the diene rubber in consideration of, for example, properties of the rubber that is obtained, and the balance between the effect that is exerted and the economic efficiency.

In addition to the components (A) to (C), the rubber composition of the present invention may include various additives that are commonly added to rubber compositions for tires and rubber compositions for other general applications, such as carbon blacks, vulcanizing agents, crosslinking agents, vulcanization accelerators, crosslinking accelerators, various oils, antioxidants, and plasticizers. These additives may be added in amounts that are commonly used in the art as long as the addition is consistent with the object of the present invention.

The rubber composition of the present invention may be obtained by kneading the components (A) to (C) and optionally other components in a usual manner.

### [3] Rubber products (tires)

The rubber composition of the present invention may be used in the production of vulcanized or crosslinked rubber products, such as, for example, tires. In the production of tires, in particular, it is preferable that the rubber composition of the present invention be used in treads.

Tires obtained using the rubber composition of the present invention are significantly enhanced in rolling resistance performance and wet grip and thus can realize desired fuel efficiency.

The structure of tires may be a conventionally known structure, and the production process may be a conventionally known process. When the tire is a pneumatic tire, the gas that fills the inside of the tire may be normal air, air having a controlled oxygen partial pressure, or an inert gas, such as nitrogen, argon, or helium.

### EXAMPLES

The present invention will be described in greater detail below by presenting Synthesis Examples, Examples, and Comparative Examples, although the present invention is not limited to these Examples. In the following Examples, the weight average molecular weight is a polystyrene-equivalent value measured by gel permeation chromatography (GPC).

### [1] Synthesis of organopolysiloxanes

### [Synthesis Example 1-1]

A 2-liter separable flask equipped with a stirrer, a reflux condenser, a dropping funnel, and a thermometer was charged with 953 g (4.0 mol) of 3-mercaptopropyltriethoxysilane (KBE-803, Shin-Etsu Chemical Co., Ltd.) and 100 g of ethanol. Subsequently, 54 g of 0.5 N hydrochloric acid (3.0 mol of water) was added dropwise at 25°C. The mixture was stirred at 80°C for 10 hours and was cooled to 25°C. 3.0 g of propylene oxide was added dropwise. The mixture was stirred at 25°C for 1 hour. The reaction solution was distilled under reduced pressure and was filtered to give 730 g of organopolysiloxane (i) as a colorless transparent liquid. The organopolysiloxane (i) obtained had a weight average molecular weight of 730 and a mercapto equivalent of 183 g/mol and was represented by the following average empirical formula:

(-C₃H₆-SH)_{1.00}(-OC₂H₅)_{1.50}SiO_{0.75} (i)

### [Synthesis Example 1-2]

A 2-liter separable flask equipped with a stirrer, a reflux condenser, a dropping funnel, and a thermometer was charged with 715 g (3.0 mol) of 3-mercaptopropyltriethoxysilane (KBE-803, Shin-Etsu Chemical Co., Ltd.), 277 g (1.0 mol) of octyltriethoxysilane (KBE-3083, Shin-Etsu Chemical Co., Ltd.), and 100 g of ethanol. Subsequently, 54 g of 0.5 N hydrochloric acid (3.0 mol of water) was added dropwise at 25°C. The mixture was stirred at 80°C for 10 hours and was cooled to 25°C. 3.0 g of propylene oxide was added dropwise. The mixture was stirred at 25°C for 1 hour. The reaction solution was distilled under reduced pressure and was filtered to give 770 g of organopolysiloxane (ii) as a colorless transparent liquid. The organopolysiloxane (ii) obtained had a weight average molecular weight of 770 and a mercapto equivalent of 256 g/mol and was represented by the following average empirical formula:

(-C₃H₆-SH)_{0.75}(-OC₂H₅)_{1.50}(-C₈H₁₇)_{0.25}SiO_{0.75} (ii)

### [Comparative Synthesis Example 1-1]

A 2-liter separable flask equipped with a stirrer, a reflux condenser, a dropping funnel, and a thermometer was charged with 238 g (1.0 mol) of 3-mercaptopropyltriethoxysilane (KBE-803, Shin-Etsu Chemical Co., Ltd.), 831 g (3.0 mol) of octyltriethoxysilane (KBE-3083, Shin-Etsu Chemical Co., Ltd.), and 100 g of ethanol. Subsequently, 54 g of 0.5 N hydrochloric acid (3.0 mol of water) was added dropwise at 25°C. The mixture was stirred at 80°C for 10 hours and was cooled to 25°C. 3.0 g of propylene oxide was added dropwise. The mixture was stirred at 25°C for 1 hour. The reaction solution was distilled under reduced pressure and was filtered to give 840 g of organopolysiloxane (iii) as a colorless transparent liquid. The organopolysiloxane (iii) obtained had a weight average molecular weight of 850 and a mercapto equivalent of 845 g/mol and was represented by the following average empirical formula:

(-C₃H₆-SH)_{0.25}(-C₈H₁₇)_{0.75}(-OC₂H₅)_{1.50}SiO_{0.75} (iii)

### [Synthesis Example 1-4]

A 1-liter separable flask equipped with a stirrer, a reflux condenser, a dropping funnel, and a thermometer was charged with 183 g (1 mol as mercapto groups) of the organopolysiloxane (i) obtained in Synthesis Example 1-1, and 95 g (0.5 mol) of vinyltriethoxysilane (KBE-1003, Shin-Etsu Chemical Co., Ltd.). Subsequently, 0.1 g of a peroxyester compound (Perbutyl O, NOF CORPORATION) was added at 90°C. The mixture was stirred at 90°C for 3 hours. The reaction solution was distilled under reduced pressure and was filtered to give 275 g of organopolysiloxane (iv) as a colorless transparent liquid. The organopolysiloxane (iv) obtained had a weight average molecular weight of 1100 and a mercapto equivalent of 555 g/mol and was represented by the following average empirical formula:

(-C₃H₆-SH)_{0.50}(-C₃H₆-S-C₂H₄-Si(OC₂H₅)₃)_{0.50}(-OC₂H₅)_{1.50}SiO_{0.75} (iv)

### [Synthesis Example 1-5]

A 1-liter separable flask equipped with a stirrer, a reflux condenser, a dropping funnel, and a thermometer was charged with 183 g (1 mol as mercapto groups) of the organopolysiloxane (i) obtained in Synthesis Example 1-1, and 143 g (0.75 mol) of vinyltriethoxysilane (KBE-1003, Shin-Etsu Chemical Co., Ltd.). Subsequently, 0.1 g of a peroxyester compound (Perbutyl O, NOF CORPORATION) was added at 90°C. The mixture was stirred at 90°C for 3 hours. The reaction solution was distilled under reduced pressure and was filtered to give 320 g of organopolysiloxane (v) as a colorless transparent liquid. The organopolysiloxane (v) obtained had a weight average molecular weight of 1300 and a mercapto equivalent of 1300 g/mol and was represented by the following average empirical formula:

(-C₃H₆-SH)_{0.25}(-C₃H₆-S-C₂H₄-Si(OC₂H₅)₃)_{0.75}(-OC₂H₅)_{1.50}SiO_{0.75} (v)

### [Example 1-1]

A 1-liter separable flask equipped with a stirrer, a reflux condenser, a dropping funnel, and a thermometer was charged with 256 g (1 mol as mercapto groups) of the organopolysiloxane (ii) obtained in Synthesis Example 1-2, and 127 g (0.67 mol) of vinyltriethoxysilane (KBE-1003, Shin-Etsu Chemical Co., Ltd.). Subsequently, 0.1 g of a peroxyester compound (Perbutyl O, NOF CORPORATION) was added at 90°C. The mixture was stirred at 90°C for 3 hours. The reaction solution was distilled under reduced pressure and was filtered to give 380 g of organopolysiloxane (vi) as a colorless transparent liquid. The organopolysiloxane (vi) obtained had a weight average molecular weight of 1150 and a mercapto equivalent of 1150 g/mol and was represented by the following average empirical formula:

(-C₃H₆-SH)_{0.25}(-C₃H₆-S-C₂H₄-Si(OC₂H₅)₃)_{0.50}(-OC₂H₅)_{1.50}(-C₈H₁₇)_{0.25}SiO_{0.75} (vi)

### [Example 1-2]

A 1-liter separable flask equipped with a stirrer, a reflux condenser, a dropping funnel, and a thermometer was charged with 256 g (1 mol as mercapto groups) of the organopolysiloxane (ii) obtained in Synthesis Example 1-2, and 142 g (0.75 mol) of vinyltriethoxysilane (KBE-1003, Shin-Etsu Chemical Co., Ltd.). Subsequently, 0.1 g of a peroxyester compound (Perbutyl O, NOF CORPORATION) was added at 90°C. The mixture was stirred at 90°C for 3 hours. The reaction solution was distilled under reduced pressure and was filtered to give 395 g of organopolysiloxane (vii) as a colorless transparent liquid. The organopolysiloxane (vii) obtained had a weight average molecular weight of 1200 and a mercapto equivalent of 1600 g/mol and was represented by the following average empirical formula:

(-C₃H₆SH)_{0.19}(-C₃H₆S-C₂H₄-Si(OC₂H₅)₃)_{0.56}(-OC₂H₅)_{1.50}(-C₈H₁₇)_{0.25}SiO_{0.75} (vii)

### [2] Preparation of rubber compositions

### [Examples 2-1 to 2-5 and Comparative Examples 2-1 and 2-2]

SBR and BR described in Table 1 were kneaded for 30 seconds using a 4-liter internal mixer (MIXTRON, Kobe Steel, Ltd.).

Next, the oil component, carbon black, silica, sulfide silane, organopolysiloxane obtained in Synthesis Example, Example, or Comparative Synthesis Example, stearic acid, antioxidant, and wax described in Table 1 were added. The internal temperature was raised to 150°C and the mixture was held at 150°C for 2 minutes and was discharged. Subsequently, the material was stretched using rolls. The rubber thus obtained was kneaded again using an internal mixer (MIXTRON, Kobe Steel, Ltd.) until the internal temperature reached 140°C and was then discharged and stretched using rolls.

The zinc oxide, vulcanization accelerators, and sulfur described in Table 1 were added, and the mixture was kneaded to give a rubber composition.

| | |
|---|---|
| SBR: | SLR-4602 (Trinseo) |
| BR: | BR-01 (JSR Corporation) |
| Oil: | AC-12 (Idemitsu Kosan Co., Ltd.) |
| Carbon black: | SEAST 3 (Tokai Carbon Co., Ltd.) |
| Silica: | Nipsil AQ (Tosoh Silica Corporation) |
| Sulfide silane: | KBE-846 (Shin-Etsu Chemical Co., Ltd.) |
| Stearic acid: | Industrial grade stearic acid (Kao Corporation) |
| Antioxidant: | Nocrac 6C (OUCHI SHINKO CHEMICAL INDUSTRIAL CO., LTD.) |
| Wax: | Ozoace-0355 (NIPPON SEIRO CO., LTD.) |
| Zinc oxide: | Zinc white #3 (MITSUI MINING & SMELTING CO., LTD.) |
| Vulcanization accelerator (a): | Nocceler D (OUCHI SHINKO CHEMICAL INDUSTRIAL CO., LTD.) |
| Vulcanization accelerator (b): | Nocceler DM-P (OUCHI SHINKO CHEMICAL INDUSTRIAL CO., LTD.) |
| Vulcanization accelerator (c): | Nocceler CZ-G (OUCHI SHINKO CHEMICAL INDUSTRIAL CO., LTD.) |
| Sulfur: | 5% oil-treated sulfur (HOSOI CHEMICAL INDUSTRY CO., LTD.) |

Unvulcanized properties and vulcanized properties of the rubber compositions obtained in Examples 2-1 to 2-5 and Comparative Examples 2-1 and 2-2 were measured by the following methods. The results are described in Tables 1 and 2. Vulcanized properties were measured with respect to vulcanized rubber sheets (2 mm thick) fabricated by pressing the rubber compositions (160°C, 10 to 40 minutes).

### [Unvulcanized properties]

### (1) Mooney viscosity

In accordance with JIS K 6300-1: 2013, the sample was preheated for 1 minute and was tested at a temperature of 130°C for 4 minutes. The result was expressed as an index relative to the result of Comparative Example 2-1 taken as 100. A smaller index value indicates a lower Mooney viscosity and thus better processability.

### (2) Vulcanizability (T90)

The vulcanization rate at 160°C was measured using a rotorless rheometer. The minimum torque ML and the maximum torque MH were determined from the vulcanization curve, and T90 (the time (min) required to reach 90% of the maximum torque) was obtained. The result was expressed as an index relative to the result of Comparative Example 2-1 taken as 100. A smaller index value indicates a higher vulcanization rate and thus higher productivity.

### [Vulcanized properties]

### (3) Hardness

The hardness was measured with a durometer (type A) in accordance with JIS K 6253-3: 2012. The result was expressed as an index relative to the result of Comparative Example 2-1 taken as 100. A larger index value indicates higher and better hardness.

### (4) Tensile properties

A JIS No. 3 dumbbell-shaped test specimen was die-cut and was tensile-tested at a stress rate of 500 mm/min in accordance with JIS K 6251 to measure the 300% modulus (M₃₀₀) [MPa] at 25°C. The result was expressed as an index relative to the result of Comparative Example 2-1 taken as 100. A larger index value indicates a higher modulus and thus better tensile properties.

### (5) Dynamic viscoelasticity (strain dispersion)

The storage modulus at 0.5% strain, E' (0.5%), and the storage modulus at 3.0% strain, E' (3.0%), were measured using a viscoelastometer (Metravib) at a temperature of 25°C and a frequency of 55 Hz. The value of [E' (0.5%) - E' (3.0%)] was calculated. The test specimen used was a sheet 0.2 cm in thickness and 0.5 cm in width. The clamp-to-clamp distance was set to 2 cm and the initial load was set to 1 N.

The value of [E' (0.5%) - E' (3.0%)] was expressed as an index relative to the result of Comparative Example 2-1 taken as 100. A smaller index value indicates better dispersibility of silica.

### (6) Dynamic viscoelasticity (temperature dispersion)

Measurement was carried out using a viscoelastometer (Metravib) at a dynamic strain under tension of 1% and a frequency of 55 Hz. The test specimen used was a sheet 0.2 cm in thickness and 0.5 cm in width. The clamp-to-clamp distance was set to 2 cm and the initial load was set to 1 N.

The values of tan δ (0°C) and tan δ (60°C) were expressed as indices relative to the results of Comparative Example 2-1 taken as 100. A larger index value of tan δ (0°C) indicates better wet grip. A smaller index value of tan δ (60°C) indicates better rolling resistance.

**[Table 1]**

| Formulation (pbw) | | Example | | | | | Comparative Example | |
|---|---|---|---|---|---|---|---|---|
| | | 2-1 | 2-2 | 2-3 | 2-4 | 2-5 | 2-1 | 2-2 |
| (B) SBR | | 70 | 70 | 70 | 70 | 70 | 70 | 70 |
| (B) BR | | 30 | 30 | 30 | 30 | 30 | 30 | 30 |
| Oil | | 30 | 30 | 30 | 30 | 30 | 30 | 30 |
| Carbon black | | 5 | 5 | 5 | 5 | 5 | 5 | 5 |
| (C) Silica | | 75 | 75 | 75 | 75 | 75 | 75 | 75 |
| Sulfide silane | | - | - | - | - | 3 | 6 | - |
| (A) Organopolysiloxane | (iv) | 6 | - | - | - | - | - | - |
| | (v) | - | 6 | - | - | - | - | - |
| | (vi) | - | - | 6 | - | 3 | - | - |
| | (vii) | - | - | - | 6 | - | - | - |
| | (iii) | - | - | - | - | - | - | 6 |
| Stearic acid | | 2 | 2 | 2 | 2 | 2 | 2 | 2 |
| Antioxidant | | 2 | 2 | 2 | 2 | 2 | 2 | 2 |
| Wax | | 1 | 1 | 1 | 1 | 1 | 1 | 1 |
| Zinc oxide | | 2.5 | 2.5 | 2.5 | 2.5 | 2.5 | 2.5 | 2.5 |
| Vulcanization accelerator (a) | | 1 | 1 | 1 | 1 | 1 | 1 | 1 |
| Vulcanization accelerator (b) | | 0.3 | 0.3 | 0.3 | 0.3 | 0.3 | 0.3 | 0.3 |
| Vulcanization accelerator (c) | | 1.5 | 1.5 | 1.5 | 1.5 | 1.5 | 1.5 | 1.5 |
| Sulfur | | 2 | 2 | 2 | 2 | 2 | 2 | 2 |
| [Unvulcanized properties] | | | | | | | | |
| Mooney viscosity | | 110 | 110 | 110 | 110 | 105 | 100 | 110 |
| T90 | | 90 | 90 | 90 | 90 | 95 | 100 | 300 |
| [Vulcanized properties] | | | | | | | | |
| Hardness | | 97 | 98 | 98 | 98 | 99 | 100 | 95 |
| Tensile properties M300 | | 125 | 118 | 120 | 116 | 110 | 100 | 90 |
| Strain dispersion [E' (0.5%) - E' (3.0%)] | | 85 | 79 | 79 | 79 | 85 | 100 | 80 |
| Dynamic viscoelasticity tan δ (0°C) | | 110 | 112 | 112 | 112 | 110 | 100 | 110 |
| Dynamic viscoelasticity tan δ (60°C) | | 82 | 75 | 75 | 76 | 80 | 100 | 80 |

As described in Table 1, the rubber compositions of Examples 2-1 to 2-5 were shown to have excellent vulcanizability and be good in tensile properties, silica dispersibility, wet grip, and rolling resistance after vulcanization, compared to the rubber composition of Comparative Example 2-1 that did not contain the organopolysiloxane of the present invention.

In contrast, the rubber composition of Comparative Example 2-2 that included a mercapto group-containing organopolysiloxane having no trialkoxysilyl-containing organic groups and no dialkoxymethylsilyl-containing organic groups was significantly low in vulcanizability and was poor in tensile properties and rolling resistance after vulcanization.

## Claims

1. A rubber composition comprising an organopolysiloxane containing a mercapto-containing organic group and either or both of a trialkoxysilyl-containing organic group and a dialkoxymethylsilyl-containing organic group.

2. The rubber composition according to claim 1, wherein the organopolysiloxane is represented by average empirical formula (1) below:
(A)ₐ(B)_{b}(C)_{c}(D)_{d}SiO_{(4-a-b-c-d)/2} (1)
wherein A denotes a mercapto-containing organic group, B denotes a trialkoxysilyl-containing organic group or a dialkoxymethylsilyl-containing organic group, C denotes a hydrolyzable group, D denotes a C₁-C₁₂ alkyl group, a C₁-C₁₀ haloalkyl group, or a C₆-C₁₂ aryl group, and a, b, c, and d indicate numbers satisfying 0 < a < 1, 0 < b < 1, 0 < c < 3, 0 ≤ d < 1, and 0 < a+b+c+d < 4.

3. The rubber composition according to claim 2, wherein the mercapto-containing organic group is represented by formula (2) below:
*-(CH₂)ₘ-SH (2)
wherein m indicates an integer of 1 to 10 and *- denotes a valence bond, the trialkoxysilyl-containing organic group or the dialkoxymethylsilyl-containing organic group is represented by formula (3) below:
*-(CH₂)ₘ-S-(CH₂)ₙ-Si(CH₃)₃₋ₖ(OR¹)ₖ (3)
wherein m indicates an integer of 1 to 10, n indicates an integer of 1 to 10, k indicates 2 or 3, R¹ independently at each occurrence denotes a C₁-C₂₀ alkyl group, a C₆-C₁₀ aryl group, a C₇-C₁₀ aralkyl group, or a C₂-C₁₀ alkenyl group, and *- denotes a valence bond, and the hydrolyzable group is represented by formula (4) below:
*-OR¹ (4)
wherein R¹ is the same as defined above and *- denotes a valence bond.

4. The rubber composition according to claim 2 or 3, wherein d is a number satisfying 0 < d < 1.

5. An organopolysiloxane represented by average empirical formula (1') below:
(A)ₐ(B)_{b}(C)_{c}(D)_{d}SiO_{(4-a-b-c-d)/2} (1')
wherein A denotes a mercapto-containing organic group, B denotes a trialkoxysilyl-containing organic group or a dialkoxymethylsilyl-containing organic group, C denotes a hydrolyzable group, D denotes a C₁-C₁₂ alkyl group, a C₁-C₁₀ haloalkyl group, or a C₆-C₁₂ aryl group, and a, b, c, and d indicate numbers satisfying 0 < a < 1, 0 < b < 1, 0 < c < 3, 0 < d < 1, and 0 < a+b+c+d < 4.
